# EUROPÄISCHE PATENTSCHRIFT

(11) **EP 0 639 736 B1**
(45) Veröffentlichungstag und Bekanntmachung des Hinweises auf die Patenterteilung: **09.07.1997**
(21) Anmeldenummer: 94105351.4
(22) Anmeldetag: 07.04.1994
(51) Int. Cl.: F16K 5/12

(54) **Regelventil**
Control valve
Soupape de réglage

(30) Priorität: 23.07.1993 DE 4324749
(43) Veröffentlichungstag der Anmeldung: 22.02.1995
(73) Patentinhaber: Firma Carl Freudenberg, D-69469 Weinheim (DE)
(72) Erfinder: Kurr, Klaus, Dr., D-69469 Weinheim (DE); Spies, Karl-Heinz, Dr., D-69488 Birkenau (DE); Krause, Wolfgang, D-74915 Waibstadt (DE)

(56) Entgegenhaltungen:
- AU-B- 438 556
- DE-A- 1 450 657
- DE-A- 2 632 476
- DE-C- 413 047
- US-A- 2 591 102
- US-A- 3 957 082
- US-A- 4 881 718

## Beschreibung

Die Erfindung betrifft ein Regelventil, umfassend ein Gehäuse mit einer zylinderförmigen Ventilkammer, wobei die Ventilkammer mit zumindest einem Zulauf und zumindest zwei Abläufen versehen ist, wobei der Zulauf und die Abläufte durch einen gemeinsamen, um eine Achse drehbaren und in der Ventilkammer angeordneten, zylinderförmigen Ventilkörper bedarfsweise zumindest teilweise verschließbar sind, wobei der Ventilkörper als Drehschieber ausgebildet und von einem Antrieb betätigbar ist, wobei der Zulauf und/oder zumindest einer der Abläufe auf der dem Ventilkörper zugewandten Seite des Gehäuses von einer Dichtung umschlossen ist, wobei die Dichtung mit dem Ventilkörper unter elastischer Vorspannung dichtend in Eingriff bringbar ist und wobei der Ventilkörper eine Erstreckung in Umfangsrichtung der Ventilkammer aufweist, die jeweils durch eine Kante begrenzt ist.

Ein solches Regelventil ist aus der DE-A-26 32 476 bekannt. Das Regelventil ist als Strömungsmitteldurchfluß-Steuerventil ausgebildet und gelangt in einem Mischhahn zum Mischen von kaltem und warmem Wasser zur Anwendung. Sowohl die Einlässe als auch die Auslässe sind einander jeweils diametral gegenüberliegend angeordnet, wobei die Einlässe und die Auslässe rechtwinklig zueinander angeordnet sind. Dabei ist allerdings zu beachten, daß die Betätigungskräfte beim Öffnen der Zuläufe durch die starke Beschleunigung der Strömung an der Abströmkante des Ventilkörpers beträchtlich sind, da die beim Öffnen entstehenden Sogeffekte auf den Ventilkörper ventilschließend wirken. Zur Überwindung der Sogkräfte ist der Antrieb entsprechend stark auszulegen, was in wirtschaftlicher Hinsicht und im Hinblick auf kompakte Abmessungen des Ventils von Nachteil ist.

Ein weiteres Regelventil ist aus der US-A-4,881,718 bekannt. Das vorbekannte Regelventil ist als Kugelventil ausgebildet und weist einen im wesentlichen kugelförmigen Ventilkörper auf. Die Aufgabe, die dem vorbekannten Kugelventil zugrunde liegt, wird darin gesehen, eine genauere Dosierung des durchgesetzten Massenstroms über einen möglichst großen Bereich zu bewirken. Das Kugelventil weist einen Zulauf und einen Ablauf auf, die im Querschnitt betrachtet auf den einander gegenüberliegenden Seiten des kugelförmigen Ventilkörpers angeordnet sind. Der Ventilkörper ist von einer kanalförmigen Durchbrechung durchdrungen, wobei im Bereich des Ein- und Austritts der Durchbrechung Ausnehmungen vorgesehen sind, die sich in Umfangsrichtung des kugelförmigen Ventilkörpers erstrecken. Durch diese Ausnehmungen soll bei einer Drehung des Ventilkörpers innerhalb der Ventilkammer eine genauere Dosierung des Kühlmittelmassenstroms möglich sein.

Der Erfindung liegt die Aufgabe zugrunde, ein Regelventil der vorbekannten Art derart weiterzuentwickeln, daß die Betätigungskräfte des Ventilkörpers zum Öffnen des Zulaufs wesentlich reduziert werden können, daß sich eine gleichmäßigere Öffnungscharakteristik des Ventils einstellt und daß der Antrieb für eine einwandfreie Betätigung des Ventilkörpers schwächer und damit wirtschaftlicher und kompakter ausgeführt werden kann.

Diese Aufgabe wird erfindungsgemäß mit den Merkmalen von Anspruch 1 gelöst. Auf vorteilhafte Ausgestaltungen nehmen die Unteransprüche Bezug.

Im Rahmen der vorliegenden Erfindung ist es vorgesehen, daß die den Zulauf während seiner Öffnung überfahrende Abströmkante eine sich in axialer Richtung erstreckende, elliptische Einbuchtung aufweist. Hierbei ist von Vorteil, daß beim Öffnen des Zulaufs eine plötzliche, starke Beschleunigung der Strömung an der Abströmkante des Ventilkörpers vermieden wird und dadurch Sogeffekte, die ventilschließend auf den Ventilkörper wirken, vernachlässigbar gering werden. Der statische Druck, der auf den Ventilkörper wirkt, bleibt während der Öffnung des Zulaufs des erfindungsgemäßen Regelventils nahezu konstant, so daß sich eine gleichmäßige Öffnungscharakteristik, beginnend mit der Öffnung des Zulaufs bis zur Freigabe des gesamten Öffnungsquerschnitts ergibt. Die elliptische Form der Einbuchtung ist insofern besonders vorteilhaft, als zunächst nur ein sehr geringer Durchtrittsquerschnitt am Ventilkörper vorbei freigegeben wird und dadurch der statische Druck und die Betätigungskraft während des Öffnungsvorgangs, bis der gesamte Querschnitt des Zulaufs freigegeben ist, weitgehend konstant bleiben.

Gemäß einer vorteilhaften Ausgestaltung kann die Einbuchtung den axialen Begrenzungen des Ventilkörpers jeweils mit Abstand benachbart zugeordnet sein. Die Führung des Ventilkörpers im Gehäuse, insbesondere im Bereich der Abströmkante mit der elliptischen Einbuchtung, ist dadurch verbessert. Verkantungserscheinungen des Ventilkörpers im Gehäuse werden durch diese Ausgestaltung zuverlässig vermieden.

Der Ventilkörper kann durch einen elektrisch angetriebene Schrittmotor betätigbar sein, wobei der Schrittmotor bevorzugt signalleitend mit einer elektronischen Regeleinrichtung verbunden ist. In Anhängigkeit von vorgegebenen Parametern, die in der Regeleinrichtung beispielsweise in Form eines Kennfelds gespeichert sind, können die Durchtrittsquerschnitte durch Zulauf und/oder Ablauf eingestellt werden. Das erfindungsgemäße Regelventil kann beispielsweise in Flüssigkeitskreisläufen angeordnet sein, um verschiedene, miteinander in Verbindung stehende Teilbereiche des Flüssigkeitskreislaufs zu schalten. Die Betätigung des Ventilkörpers mit einem elektrisch angetriebenen Schrittmotor ist für derartige Anwendungsfälle besonders vorteilhaft, da eine besonders exakte Regelung des Flüssigkeitsverlaufs in Abhängigkeit von den Kenndaten in der Regeleinrichtung erfolgen kann. Eine Betätigung des Ventilkörpers durch elektromagnetisch, pneumatisch oder hydraulisch angetriebene Stellelemente ist ebenfalls möglich. Eine besonders einfache und in wirtschaftlicher Hinsicht kostengünstige Betätigung des Ventilkörpers kann beispielsweise durch ein Dehnstoffelement erfolgen, wobei der Ventilkörper in Abhängigkeit von der Temperatur, mit der das Dehnstoffelement beaufschlagt ist, den Durchtrittsquerschnitt durch den Zulauf und/oder die Abläufe frei gibt.

Der Zulauf und die Abläufe sind dichtend mit dem um seine Achse drehbaren Ventilkörper in Eingriff bringbar, wobei die Dichtungen sowohl einer statischen als auch einer dynamischen Belastung ausgesetzt sind. Insbesondere bei häufiger Betätigung des Ventilkörpers sind Dichtungen, die während der gesamten Gebrauchsdauer nur einem vernachlässigbar geringen abrasiven Verschleiß unterliegen und dadurch gute Gebrauchseigenschaften während der gesamten Gebrauchsdauer aufweisen, von hervorzuhebendem Vorteil. Zur Erzielung eines ausgezeichneten Abdichtungsergebnisses während der gesamten Gebrauchsdauer kann die Dichtung durch eine ringförmige Formteildichtung aus PTFE gebildet sein und auf der dem Ventilkörper abgewandten Seite auf einem Federelement in axialer Richtung der Formteildichtung elastisch nachgiebig abgestützt sein. Hierbei ist von Vorteil, daß trotz guter Abdichtung des Zulaufs und/oder der Abläufe gegenüber dem Ventilkörper eine ausgezeichnete, leichtgängige Relativbeweglichkeit des drehbaren Ventilkörpers erhalten bleibt. Durch die in axialer Richtung der Formteildichtung elastische Nachgiebigkeit, ist die Formteildichtung aus PTFE auch dann mit dem Ventilkörper dichtend in Eingriff und diesem in optimaler Weise zugeordnet, wenn sich herstellungs- und/oder montagebedingt eine absolut exakte konzentrische Zuordnung von Gehäuse und Ventilkörper nicht erzielen läßt.

Das Federelement kann beispielsweise durch einen O-Ring aus elastomerem Werkstoff gebildet sein. O-Ringe sind Bauteile, die in nahezu allen gewünschten Abmessungen preisgünstig verfügbar sind, und nur ein, im Vergleich zu anderen Federelementen, geringes Gewicht aufweist. Das erfindungsgemäße Regelventil weist insgesamt ein vergleichsweise geringes Eigengewicht auf und ist in großen Stückzahlen preisgünstig herstellbar.

Das Gehäuse kann einen Zulauf und drei Abläufe aufweisen. Eine derartige Ausgestaltung ist insbesondere dann sinnvoll, wenn das Regelventil in Kühlsystemen von Verbrennungskraftmaschinen zur Anwendung gelangt.

Zur Verwendung des erfindungsgemäßen Regelventils in einem Flüssigkeits-Kühlsystems einer Verbrennungskraftmaschine ist es vorgesehen, daß der Zulauf flüssigkeitsleitend mit dem Kühlwasseraustritt der Verbrennungskraftmaschine verbunden ist, daß die Abläufe mit dem Kühlerkreislauf, dem Kurzschlußkreislauf und dem Kreislauf für die Fahrzeug-Innenraumheizung verbunden sind, daß dem Zulauf der Ablauf zum Kühlerkreislauf einerseits und der Ablauf zum Innenraum-Heizungskreislauf andererseits in Umfangsrichtung der Ventilkammer benachbart zugeordnet sind, daß der Zulauf und die Abläufe für Kühler und Innenraumheizung gemeinsam vollständig verschließbar sind und daß der Ablauf des Kurzschlußkreislaufs nur dann vom Ventilkörper vollständig verschlossen ist, wenn der Zulauf und die in Umfangsrichtung beiderseits angrenzenden Auslässe vollständig durchströmbar sind. Durch die Verwendung des erfindungsgemäßen Regelventils ist ein besonders teilearmer Aufbau eines Flüssigkeits-Kühlsystems von Verbrennungskraftmaschinen möglich. Lediglich ein Regelventil gelangt zur Anwendung, um sämtliche Kreisläufe des Kühlsystems in Abhängigkeit von beispielsweise der Bauteiltemperatur des Zylinderkopf und/oder der Kühlmitteltemperatur durchströmbar zu schalten. Der Durchtrittsquerschnitt durch den Zulauf in die Ventilkammer und durch die Abläufe aus der Ventilkammer in die angrenzenden Kreisläufe kann durch den stufenlos betätigbaren Ventilkörper problemlos den jeweiligen Gegebenheiten des Anwendungsfalles angepaßt werden. Gelangt das Regelventil im Flüssigkeits-Kühlsystem einer Verbrennungskraftmaschine zur Anwendung, hat es sich als vorteilhaft bewährt, daß dem Ventilkörper eine Rückstellfeder zugeordnet ist, die diesen, beispielsweise bei Ausfall des Antriebs in eine Position bringt, in der die angeschlossene Maschine keinen Schaden nimmt. Eine derartige Position ist beispielsweise dann eingestellt, wenn der Ventilkörper den Zulauf in die Ventilkammer und den Ablauf zum Kühler und zur Fahrzeuginnenraumheizung vollständig frei gibt und den Kurzschlußkreislauf vollständig verschließt. Eine Überhitzung der angeschlossenen Maschine ist dadurch zuverlässig ausgeschlossen. Durch die Integration des Heizungskreislaufs in das Kühlmittelmischventil ist eine Unterbindung der Kühlmittelumwälzung in der Warmlaufphase möglich, da während der Warmlaufphase auch die Zirkulation des Kühlmittels im Fahrzeug-Innenraumheizungskreislauf unterbunden ist. Der Antrieb des Regelventils kann beispielsweise durch einen elektrisch angetriebenen Schrittmotor erfolgen, der signalleitend mit der elektronischen Motorsteuerung verbunden ist. In Abhängigkeit von Parametern, die in Kennfeldern der elektronischen Motorsteuerung gespeichert sind, kann die Kühlmitteltemperatur während des Betriebs der Verbrennungskraftmaschine auf bedarfsabhängige Werte eingestellt werden. Dadurch sind Verbrauchs- und Emissionsreduzierungen möglich. Auch eine Bauteiltemperaturregelung, beispielsweise die Temperaturregelung des Zylinderkopf ist möglich.

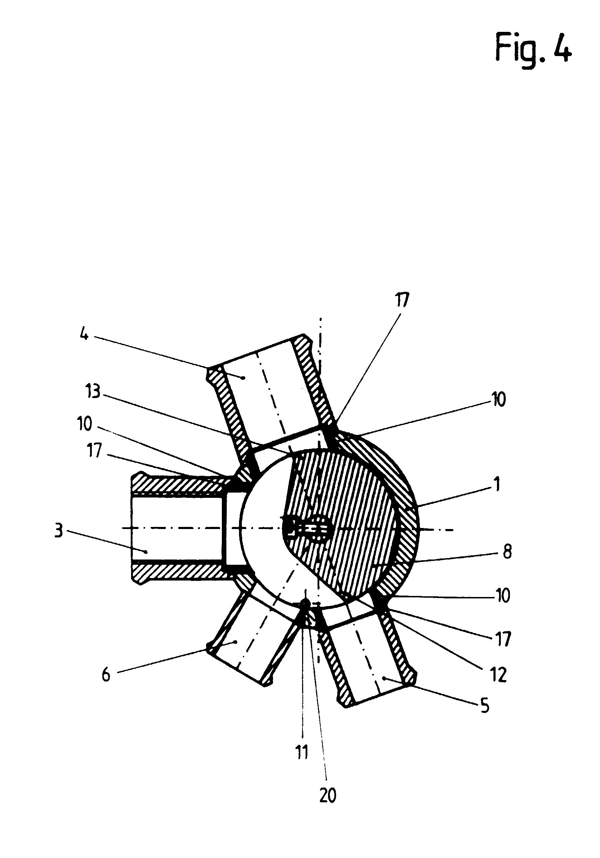

Das erfindungsgemäße Regelventil wird nachfolgend anhand der beigefügten Zeichnungen Fig. 1 bis 6 näher erläutert. Diese zeigen die zu berücksichtigenden Einzelkomponenten teilweise in schematischer Darstellung.

In Fig. 1 ist ein Längsschnitt durch ein Ausführungsbeispiel eines Regelventils gezeigt, das die erfindungswesentlichen Merkmale aufweist.

In den Fig. 2 bis 5 ist das in Fig. 1 gezeigte Regelventil in quergeschnittener Darstellung und voneinander abweichenden Einstellungen gezeigt.

In Fig. 6 ist der Ventilkörper aus dem Regelventil gemäß Fig. 1 als Einzelteil in einer perspektivischen Ansicht dargestellt.

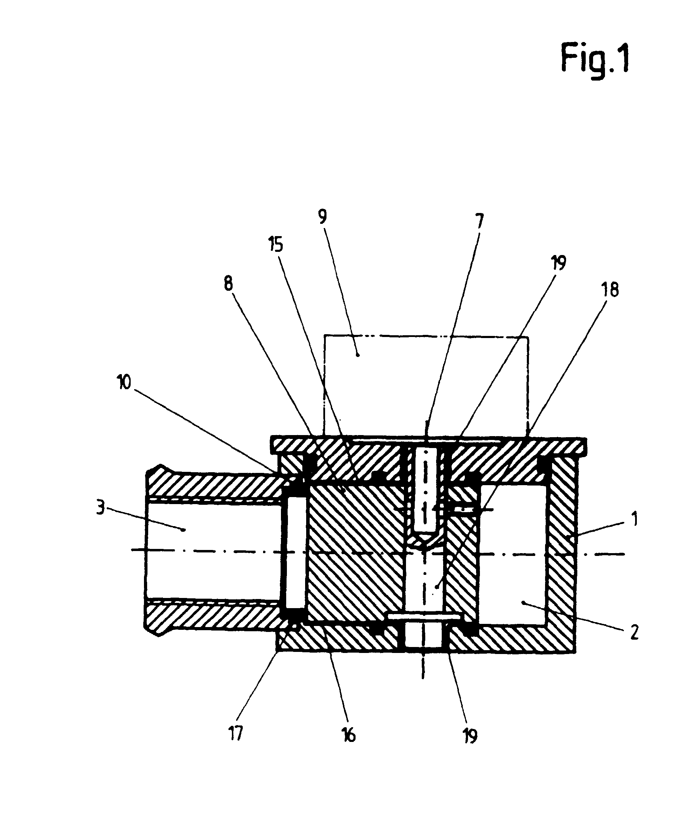

In Fig. 1 ist ein Ausführungsbeispiel eines Regelventils gezeigt, das zur Regelung des Kühlmittelmassenstroms durch ein Flüssigkeits-Kühlsystem einer Verbrennungskraftmaschine zur Anwendung gelangt. Das Regelventil umfaßt im wesentlichen ein hohlzylindrisches Gehäuse 1, das eine Ventilkammer 2 umschließt, wobei innerhalb der Ventilkammer 2 eine Ventilkörper 8 angeordnet ist. Der Ventilkörper 8 ist drehfest mit einer Antriebsachse 19 verbunden und durch einen hier symbolisch angedeuteten Antrieb 9 um die Achse 7 drehbar. Die Ventilkammer 2 ist gegenüber der Umgebung und dem Ventilkörper 8 abgedichtet. Die Anschlüsse am Gehäuse 1, die durch einen Zulauf 3 und drei in Fig. 1 nicht dargestellte Abläufe gebildet sind, sind als Rohrstutzen ausgeführt, die flüssigkeitsdicht mit dem Gehäuse 1 verbunden sind. Die Abdichtung der Rohrstutzen gegenüber dem Ventilkörper 8 erfolgt auf der dem Ventilkörper 8 zugewandten Seite durch eine Dichtung 10, die als Formteil aus PTFE hergestellt ist, wobei die Dichtung 10 auf einem als O-Ring ausgebildeten Federelement 17 in axialer Richtung des Stutzens elastisch nachgiebig abgestützt ist. Die Führung der Antriebsachse 18 innerhalb des Gehäuses 1 erfolgt in Gleitbuchsen 19, um eine möglichst reibungsarme Relativbeweglichkeit des Ventilkörpers 8 bezogen auf das Gehäuse 1 sicherzustellen.

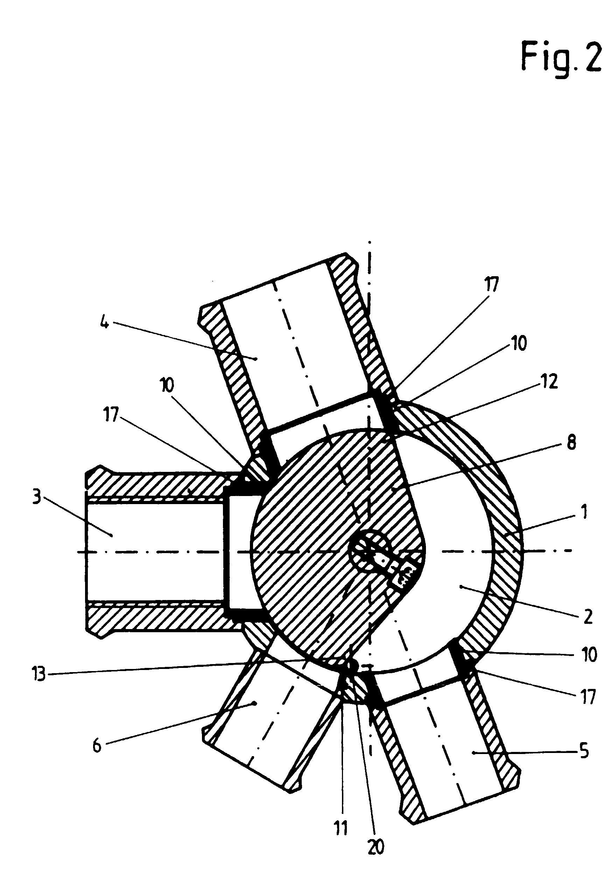

In Fig. 2 ist das in Fig. 1 gezeigte Regelventil in quergeschnittener Darstellung gezeigt. Das Regelventil ist mit einem Zulauf 3 versehen, der in diesem Ausführungsbeispiel flüssigkeitsleitend mit dem Kühlwasseraustritt einer nicht dargestellten Verbrennungskraftmaschine verbunden ist. Die Abläufe 4, 5 und 6 verbinden die Ventilkammer 2 mit dem Kühlerkreislauf, dem Kurzschlußkreislauf und dem Fahrzeug-Innenraumheizungskreislauf des Kühlsystems. Als Rotationsbegrenzung des Ventilkörpers 8 ist ein Anschlag 20 vorgesehen. Durch die elastische Nachgiebigkeit der als O-Ring ausgebildeten Federelemente 17 sind die aus PTFE bestehenden Dichtungen 10 des Zulaufs 3 und des Ablaufs 4 unter elastischer Vorspannung dichtend mit der Mantelfläche des Ventilkörpers 8 in Eingriff. Der hier dargestellte Betriebszustand, bei dem der Kühlmittelzulauf durch den Zulauf 3 gesperrt ist, bedingt eine kurze Warmlaufphase und eine rasche Erwärmung der Verbrennungskraftmaschine nach dem Kaltstart. Eine Zirkulation des Kühlmittels durch das Kühlsystem der Verbrennungskraftmaschine findet nicht statt.

Mit zunehmender Erwärmung des Kühlmittels und/oder der Bauteile des Motors bewegt sich der Ventilkörper 8 im Uhrzeigersinn vom Anschlag 20 in Richtung "Öffnen des Zulaufs 3", bis der gesamte Öffnungsquerschnitt des Zulaufs 3 freigegeben ist. Die Geometrie des Ventilkörpers 8 und die Anordnung des Zulaufs 3 relativ zu den Abläufen 4, 5, 6 bewirken, daß mit vollständig geöffnetem Zulauf 3 auch der Ablauf 5 zum Kurzschlußkreislauf und der Ablauf 6 zum Heizungskreislauf vollständig geöffnet sind. Der Ablauf 4 ist Richtung des Kühlerkreislaufs ist durch den Ventilkörper 8 verschlossen, um weiterhin eine rasche Erwärmung der Maschine auf die optimale Betriebstemperatur zu erreichen.

Mit weiter zunehmender Temperatur der in der Verbrennungskraftmaschine angeordneten Bauteile und/oder des Kühlmittels im Kühlsystem wird der Ventilkörper 8 durch den Antrieb 9 weiter in Uhrzeigerrichtung bewegt, bis die Kante 11 die die Abströmkante 13 bildet, einen Teil des Querschnitts des Ablaufs 4 freigibt und die in Umfangsrichtung gegenüberliegende Kante 12 einen Teil des Ablaufs 5 zum Kurzschlußkreislauf verschließt. Ein Teil des im Kühlungssystem zirkulierenden Kühlmittels gelangt durch den Ablauf 4 in den Kühler und wird der Verbrennungskraftmaschine anschließend gekühlt wieder zugeführt.

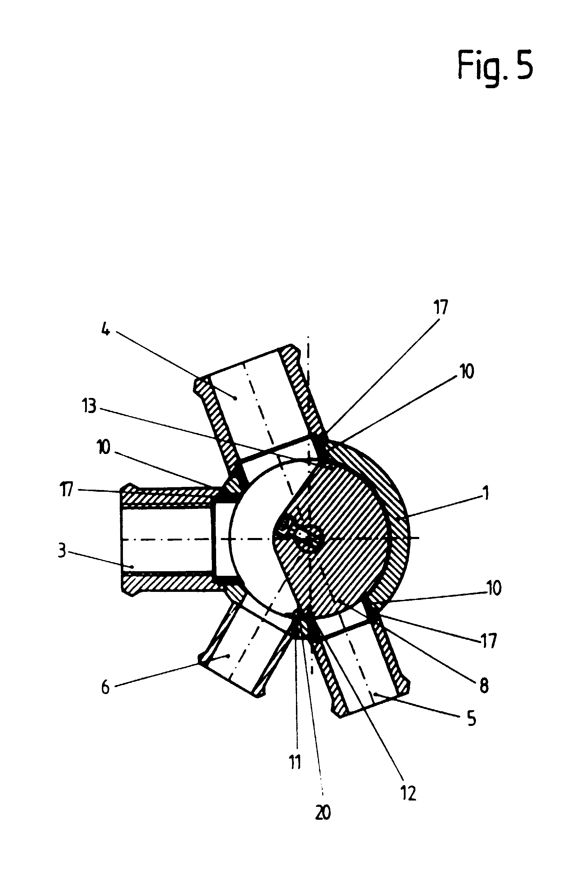

In Fig. 5 ist der Betriebszustand des Regelventils gezeigt, der sich beispielsweise dann einstellt, wenn die Verbrennungskraftmaschine unter Vollast betrieben wird und maximale Kühlleistung gefordert ist. Die Kante 12 des Ventilkörpers 8 ist mit dem Anschlag 20 in Eingriff und überdeckt den Ablauf 5 des Kurzschlußkreislaufs vollständig und dichtend. Um eine maximale Kühlleistung zu erreichen, ist der Ablauf 4 zum Kühler vollständig geöffnet. Das durch den Zulauf 3 in das Regelventil eingespeiste Kühlmittel verteilt sich in diesem Betriebszustand anteilig auf den Fahrzeug-Innenraumheizungskreislauf und den Kühlerkreislauf.

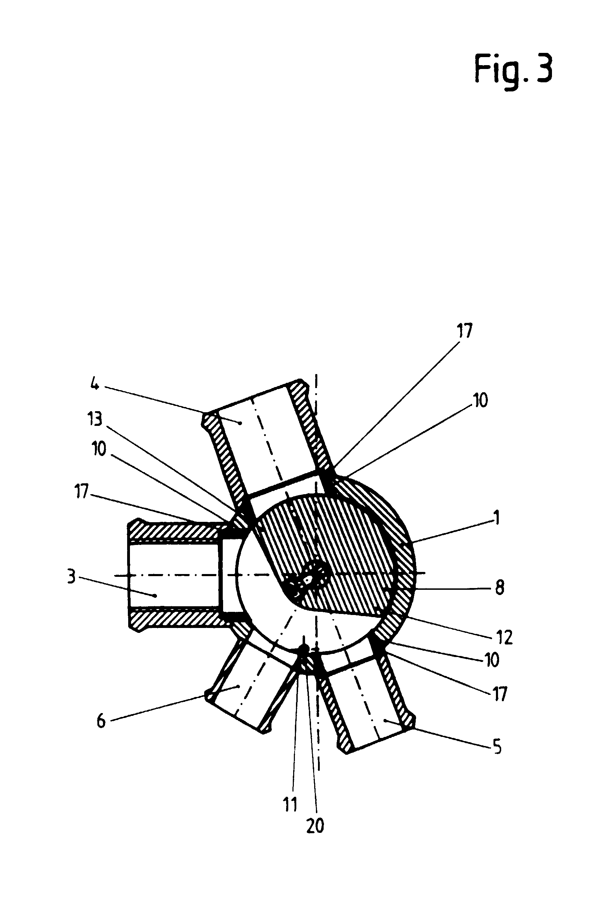

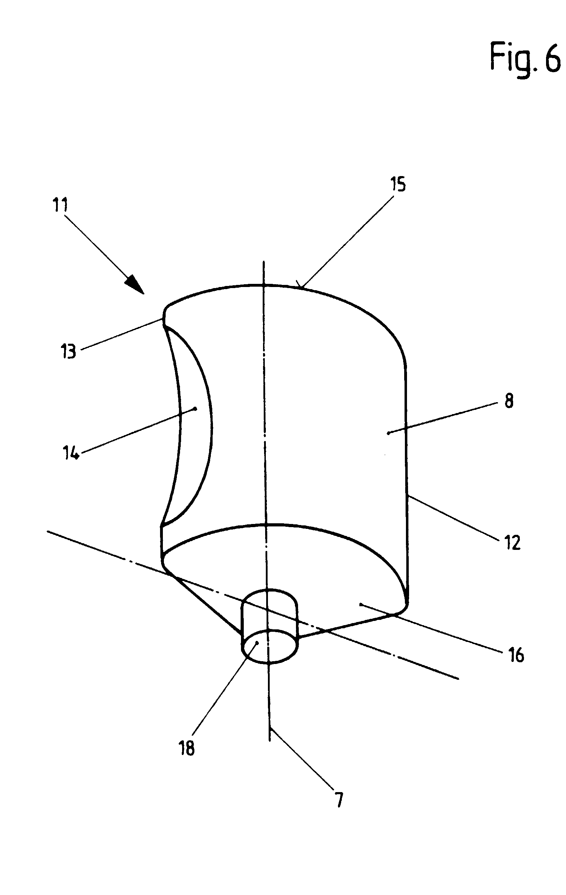

In Fig. 6 ist eine Ausführungsbeispiel eines Ventilkörpers 8 gezeigt, der im vorstehend beschriebenen Regelventil zur Anwendung gelangt. Die Kante 11, die als Abströmkante 13 ausgebildet ist, weist eine elliptische Einbuchtung 14 auf, die sich in axialer Richtung zwischen den axialen Begrenzungen 15, 16 des Ventilkörpers 8 erstreckt. Ausgehend von dem Betriebszustand des Regelventils, der in Fig. 2 dargestellt ist, wird der Ventilkörper 8 im Uhrzeigersinn bewegt und gibt, wie in Fig. 3 dargestellt, den Zulauf 3 allmählich frei. Um beim Öffnen des Zulaufs 3 durch eine plötzliche Querschnittserweiterung eine schlagartige Beschleunigung der Strömung und dadurch eine Verringerung des statischen Drucks zu verhindern, ist die Abströmkante 13 mit einer elliptischen Einbuchtung 14 versehen. Dadurch werden beim Öffnen des Zulaufs 3 Sogeffekte vermieden, die ein Drehmoment auf den Ventilkörper 8 entgegen der Öffnungsrichtung bewirken. Die elliptische Einbuchtung 14 bewirkt eine gleichmäßige Öffnungscharakteristik des Ventils bei vergleichsweise geringen Betätigungskräften durch den Antrieb 9.

## Patentansprüche

1. Regelventil, umfassend ein Gehäuse (1) mit einer zylinderförmigen Ventilkammer (2), wobei die Ventilkammer (2) mit zumindest einem Zulauf (3) und zumindest zwei Abläufen (4, 5, 6) versehen ist, wobei der Zulauf (3) und die Abläufe (4, 5, 6) durch nur einen gemeinsamen, um eine Achse (7) drehbaren und in der Ventilkammer (2) angeordneten, zylinderförmigen Ventilkörper (8) bedarfsweise zumindest teilweise verschließbar sind, wobei der Ventilkörper (8) als Drehschieber ausgebildet und von einem Antrieb(9) betätigbar ist, wobei der Zulauf (3) und/oder zumindest einer der Abläufe (4, 5, 6) auf der dem Ventilkörper (8) zugewandten Seite des Gehäuses (1) von einer Dichtung (10) umschlossen ist, wobei die Dichtung (10) mit dem Ventilkörper (8) unter elastischer Vorspannung dichtend in Eingriff bringbar ist und wobei der Ventilkörper (8) eine Erstreckung in Umfangsrichtung der Ventilkammer (2) aufweist, die jeweils durch eine Kante (11, 12) begrenzt ist, dadurch gekennzeichnet, daß die den Zulauf (3) während seiner Öffnung überfahrende Abströmkante (13) eine sich in axialer Richtung erstreckende, elliptische Einbuchtung (14) aufweist.

2. Regelventil nach Anspruch 1, dadurch gekennzeichnet, daß die Einbuchtung (14) den axialen Begrenzungen (15, 16) des Ventilkörpers (8) jeweils mit Abstand benachbart zugeordnet ist.

3. Regelventil nach Anspruch 1 bis 2, dadurch gekennzeichnet, daß der Ventilkörper (8) durch einen elektrisch angetriebenen Schrittmotor betätigbar ist und daß der Schrittmotor signalleitend mit einer elektronischen Regeleinrichtung verbunden ist.

4. Regelventil nach Anspruch 1 bis 3, dadurch gekennzeichnet, daß die Dichtung (10) durch eine ringförmige Formteildichtung aus PTFE gebildet ist und auf der dem Ventilkörper (8) abgewandten Seite auf einem Federelement (17) in axialer Richtung der Formteildichtung elastisch nachgiebig abgestützt ist.

5. Regelventil nach Anspruch 4, dadurch gekennzeichnet, daß das Federelement (17) durch einen O-Ring aus elastomerem Werkstoff gebildet ist.

6. Regelventil nach Anspruch 1 bis 5, dadurch gekennzeichnet, daß das Gehäuse (1) einen Zulauf (3) und drei Abläufe (4, 5, 6) aufweist.

7. Verwendung eines Regelventils nach Anspruch 6 in einem Flüssigkeits-Kühlsystem einer Verbrennungskraftmaschine, dadurch gekennzeichnet, daß der Zulauf (3) flüssigkeitsleitend mit dem Kühlwasseraustritt der Verbrennungskraftmaschine verbunden ist, daß die Auslaßöffnungen (4, 5, 6) mit dem Kühlerkreislauf, dem Kurzschlußkreislauf und dem Kreislauf für die Fahrzeug-Innenraumheizung verbunden sind, daß dem Zulauf (3) der Ablauf (4) zum Kühlerkreislauf einerseits und der Ablauf (6) zum Innenraumheizungskreislauf andererseits in Umfangsrichtung der Ventilkammer (2) benachbart zugeordnet sind, daß der Zulauf (3) und die Abläufe (4, 6) für Kühler und Innenraumheizung gemeinsam vollständig verschließbar sind und daß der Ablauf (5) des Kurzschlußkreislaufs nur dann vom Ventilkörper (8) vollständig verschlossen ist, wenn der Zulauf (3) und die in Umfangsrichtung beiderseits angrenzenden Auslässe (4, 6) vollständig durchströmbar sind.

## Claims

1. A control valve, comprising a housing (1) with a cylindrical valve chamber (2), the valve chamber (2) being provided with at least one inlet (3) and at least two outlets (4, 5, 6), it being possible for the inlet (3) and the outlets (4, 5, 6) to be at least partially closed, if required, by only one common cylindrical valve element (8) which can be rotated about an axis (7) and is arranged in the valve chamber (2), the valve element (8) being designed as a rotary slide and being actuable by a drive (9), the inlet (3) and/or at least one of the outlets (4, 5, 6) being surrounded by a seal (10) on the side of the housing (1) facing the valve element (8), it being possible for the seal (10) to be brought into sealing engagement with the valve element (8) under elastic prestress, and the valve element (8) having an extent in the circumferential direction of the valve chamber (2) which is bounded in each case by an edge (11, 12), characterized in that the flow-off edge (13) which moves over the inlet (3) while it is being opened has an elliptical recess (14) extending in the axial direction.

2. A control valve according to claim 1, characterized in that the recess (14) is arranged in each case with spacing adjacent to the axial boundaries (15, 16) of the valve element (8).

3. A control valve according to either of claims 1 or 2, characterized in that the valve element (8) can be actuated by an electrically driven stepping motor, and in that the stepping motor is connected in a signal-conducting manner to an electronic control device.

4. A control valve according to any of claims 1 to 3, characterized in that the seal (10) is formed by an annular shaped-part seal made of PTFE and is supported on the side remote from the valve element (8) on a spring element (17) so as to be elastically flexible in the axial direction of the shaped-part seal.

5. A control valve according to claim 4, characterized in that the spring element (17) is formed by an O-ring made of elastomeric material.

6. A control valve according to any of claims 1 to 5, characterized in that the housing (1) has an inlet (3) and three outlets (4, 5, 6).

7. The use of a control valve according to claim 6 in a liquid cooling system of an internal combustion engine, characterized in that the inlet (3) is connected in a liquid-conducting manner to the cooling-water outlet of the internal combustion engine, in that the outlet openings (4, 5, 6) are connected to the radiator circuit, the short circuit and the circuit for the vehicle interior heating, in that the outlet (4) to the radiator circuit on the one hand and the outlet (6) to the interior heating circuit on the other hand are arranged adjacent to the inlet (3) in the circumferential direction of the valve chamber (2), in that the inlet (3) and the outlets (4, 6) for the radiator and the interior heating can together be completely closed, and in that the outlet (5) of the short circuit is only completely closed by the valve element (8) when the inlet (3) and the outlets (4, 6) adjoining it on both sides in the circumferential direction allow complete throughflow.

## Revendications

1. Soupape de réglage, comportant une cage (1) avec une chambre de soupape (2) cylindrique, la chambre de soupape (2) étant pourvue d'au moins une alimentation (3) et d'au moins deux écoulements (4, 5, 6), l'alimentation (3) et les écoulements (4, 5, 6) pouvant être fermés, en cas de besoin, au moins partiellement par un seul corps de soupape (8) cylindrique commun mobile autour d'un axe (7) et disposé dans la chambre de soupape (2), le corps de soupape (8) se présentant sous forme de vanne rotative et pouvant être actionné par un entraînement (9), l'alimentation (3) et/ou au moins l'un des écoulements (4, 5, 6) étant enveloppés sur le côté orienté vers le corps de soupape (8) de la cage (1) d'un joint d'étanchéité (10), le joint d'étanchéité (10) pouvant être mis en prise étanche, sous précontrainte élastique, avec le corps de soupape (8) et le corps de soupape (8) présentant une extension dans le sens circonférentiel de la chambre de soupape (2), qui est limitée par respectivement un bord (11, 12), caractérisée en ce que le bord d'écoulement (13) passant devant l'alimentation (3) pendant son ouverture comporte un creux (14) elliptique s'étendant dans le sens axial.

2. Soupape de réglage selon la revendication 1, caractérisée en ce que le creux (14) est affecté à chaque fois de manière contigüe et à une certaine distance aux limitations axiales (15, 16) du corps de soupape (8).

3. Soupape de réglage selon la revendication 1 ou 2, caractérisée en ce que le corps de soupape (8) peut être actionné par un moteur pas à pas à entraînement électrique et en ce que le moteur pas à pas est relié à un dispositif de réglage électronique de manière à assurer l'acheminement des signaux.

4. Soupape de réglage selon la revendication 1 à 3, caractérisée en ce que le joint d'étanchéité (10) est formé par un joint d'étanchéité moulé en PTFE et appuyé élastiquement dans le sens axial du joint d'étanchéité moulé, sur le côté opposé au corps de soupape (8), sur un élément élastique (17).

5. Soupape de réglage selon la revendication 4, caractérisée en ce que l'élément élastique (17) est formé par un joint torique en matériau élastomère.

6. Soupape de réglage selon les revendications 1 à 5, caractérisée en ce que la cage (1) comporte une alimentation (3) et trois écoulements (4, 5, 6).

7. Utilisation d'une soupape de réglage selon la revendication 6 dans un circuit de refroidissement de liquide d'une machine à combustion interne, caractérisée en ce que l'alimentation (3) est reliée à la sortie d'eau de refroidissement de la machine à combustion interne de manière à laisser passer le liquide, en ce que les orifices d'écoulement (4, 5, 6) sont reliés au circuit de refroidissement, au court-circuit et au circuit de chauffage de l'habitacle du véhicule, en ce que l'écoulement (4) vers le circuit de refroidissement d'une part et l'écoulement (6) vers le circuit de chauffage de l'habitacle d'autre part sont contigus à l'alimentation (3), dans le sens circonférentiel de la chambre de soupape (2), en ce que l'alimentation (3) et les écoulements (4, 6) pour le radiateur et le chauffage de l'habitacle peuvent être entièrement fermés ensemble et en ce que l'écoulement (5) du court-circuit n'est entièrement fermé par le corps de soupape (8) que lorsque l'alimentation (3) et les écoulements (4, 6) contigus de part et d'autre dans le sens circonférentiel sont entièrement pénétrables.
